# EUROPEAN PATENT SPECIFICATION

(11) **EP 0 807 984 B1**
(45) Date of publication and mention of the grant of the patent: **29.12.1999**
(21) Application number: 97108053.6
(22) Date of filing: 16.05.1997
(51) Int. Cl.: H01M 2/02, B21D 51/36, B21D 22/20, B21D 22/28

(54) **Battery can-forming plate and battery can**
Blech für die Formgebung eines Batteriebehälters und daraus erhältlicher Batteriebecher
Tôle pour former un boîtier de batteries et boîtier de batteries

(30) Priority: 17.05.1996 JP 14804396
(43) Date of publication of application: 19.11.1997
(73) Proprietor: KATAYAMA SPECIAL INDUSTRIES, LTD., Osaka-shi, Osaka-fu (JP)
(72) Inventor: Sugikawa, Hirofumi, Toyonaka-shi, Osaka-fu (JP)
(74) Representative: TER MEER STEINMEISTER & PARTNER GbR

(56) References cited:
- EP-A- 0 629 009
- EP-A- 0 732 758
- EP-A- 0 741 423
- DE-A- 3 132 548

## Description

### BACKGROUND OF THE INVENTION

### Field of the Invention

The present invention relates to a battery can-forming plate and a battery can of a primary battery and a secondary battery formed of the battery can-forming plate and more particularly, to a battery can having a thin side wall to improve the performance of the battery and increase the capacity of the battery can and further a battery can which can be allowed to be thin in a small number of processings to improve productivity.

### Description of Related Art

Batteries are used as the power source of the various kinds of cordless equipments such as personal lap-top computers, cellular telephones, and the like which are widely used in recent years. In the portable equipments, the space occupied by batteries is very large. In order to make the portable equipments compact and light, it is necessary to provide them with batteries which are compact and light, and yet have a high performance. Thus, battery cans are required to have a high capacity.

Generally, nickel-plated steel plates are used as the battery can. Steel plates of T-1 (temper 1) and T-2 (temper 2) specified by JIS G 3303 standard are used. The mechanical characteristic of the steel plates of T-1 and T-2 are as indicated in table 1 shown below.

**Table 1**

| | Mechanical Characteristics | |
|---|---|---|
| | HR30T | YP |
| T-1 | 49±3 | 200-235 |
| T-2 | 53±3 | 220-245 |
| T-2.5 | 55±3 | 235-260 |
| T-3 | 57±3 | 245-320 |
| T-4 | 61±3 | 300-350 |
| T-5 | 65±3 | 340-380 |
| DR-8 | 73 | 549 target |
| DR-9 | 76 | 618 target |
| DR-9M | 77 | 657 target |
| DR-10 | 80 | 686 target |

In order to allow the battery can to have a high capacity, it is necessary to make the battery can thin because the outer shape of the battery can is specified by the international standard. But the thickness of the bottom wall of the battery can cannot be made thinner than that of the side wall thereof because the bottom wall has a yield strength and a strength high enough to withstand the internal pressure of the battery can. In particular, in the case of a secondary battery, if the bottom wall is thin, the inner and outer surfaces of the bottom wall is strained at the time of spot welding or laser welding. Thus, the bottom wall is required to be so thick that it is not strained.

The following two methods, namely, transfer drawing method and drawing & ironing (hereinafter referred to as DI) method are used to form a cylindrical battery can: In transfer drawing method, a circular blank punched from a nickel-plated steel plate is fed to a plurality of dies having different drawing diameters to draw the circular blank so as to form a cylindrical steel plate, as described in Examined Japanese Patent Publication No. 7-99686. In DI method, a steel plate is sequentially passed through dies which have different drawing diameters and are coaxially vertically arranged, with a punch applying pressure to the steel plate to obtain a cylindrical steel plate. In the transfer drawing method, the thickness of the steel plate is not reduced. Thus the thickness of the bottom wall and side wall of a formed battery can is almost equal to that of the steel plate. In DI method, the thickness of the bottom wall of a formed battery can is almost equal to that of the steel plate, but the thickness of the side wall thereof is thinner than that of the bottom wall (steel plate) because the side wall is ironed.

Because the internal pressure of the battery is 14.7-29.4 MPa (150kgf/cm ² - 300kgf/cm ²), it is necessary that in an alkali manganese dry cell battery, the thickness of the bottom wall (top portion of battery can in primary battery) is 0.4mm - 0.3mm in unit-1 battery can and 0.25mm in unit-3 battery can. Therefore, in unit-1 battery can, a steel plate of T-1 or T-2 having a thickness 0.4mm - 0.3mm is used, while in unit-3 battery can, a steel plate of T-1 or T-2 having a thickness 0.25mm is used.

As described above, the side wall of the battery can is required to be thin so as to increase the battery capacity Thus, when a steel plate of 0.4mm is used, the portion of the steel plate corresponding to the side wall is ironed to be reduced to 0.2mm which is about 50% of the original thickness.

However, when the thickness of the side wall is reduced to about 50% of the original thickness, a plurality of dies having different drawing diameters is required. Therefore, a large equipment is required regardless of whether transfer drawing processing or DI processing is adopted. In particular, in the case of transfer drawing processing, the steel plate is processed by each die by transferring. Thus, the progressing time takes long and hence poor productivity. Therefore, the battery can is manufactured at a high cost.

### SUMMARY OF THE INVENTION

The present invention has been made in view of the above-described problems. It is accordingly an object of the present invention to reduce the reduction percentage of the thickness of a steel plate by drawing and ironing it without making the thickness of the side wall of a formed battery can larger than that of the side wall of the conventional battery can. That is, it is an object of the present invention to accomplish a high-speed drawing so as to improve productivity and manufacture a battery can at a low cost. Owing to the use of the steel plate with increased yield strength and strength, the object can be achieved by thinly drawing the part of the steel plate corresponding to the bottom wall of the battery can so as to reduce the difference between the thickness of the side wall thereof and the original thickness of the steel plate.

The objects of the invention are achieved with the features indicated in the independent claims.

EP-A-0 741 423, which forms prior art pursuant to Article 54(3) and (4) EPC for some of the designated countries (DE, FR, GB), discloses already a battery can made from a battery can-forming sheet which is nickel plated and has a yield strength of 32 - 52 ksi (220 N/mm² - 359 N/mm², a hardness of 76 - 82, a sheet thickness from 0,110 to 0,150 mm and Temper grades of Temper 3,5 or 4.

According to the present invention, a battery can-forming plate is used to form a one end-open battery can having a side wall and a bottom wall by drawing, the plate being a high yield strength steel plate the YP (yielding point) of which is not less then 250 N/mm² and not more than700 N/mm², the HR30T (hardness) of which is not less than 55 and not more than 80, and the thickness of which is in a range of 0.6 mm - 0.1 mm.

One surface of the steel plate is processed as a rough surface, whereas the other surface thereof is processed as a mirror-like surface. That is, when a steel plate is ironed to form a battery can, the area of contact between the inner surface of the battery can and an active substance can be allowed to be large by using the rough surface as the inner surface of the battery can and further, the battery can can be allowed to look beautiful and have an improved corrosion-resistant property by using the mirror-like surface as the outer surface of the battery can.

As the steel plate having a high yield strength, steel plates of T-3 through T-5 and DR-8 through DR-10 of JIS G 3303 are preferably used.

That is, the steel plates having the mechanical characteristic described above belong to T-3 (temper-3) through T-5 (temper-5) and DR-8 through DR-10, as shown in table 1. Because the DR plate is elongated little, it has not been used to form the battery can by press drawing processing. But as a result of experiments made by the present inventor, it was revealed that the DR plate can withstand both transfer drawing processing and DI processing. Therefore, the present invention includes the use of the DR plate as a plate of the battery can.

As indicated by YP (yielding point) and HR30T (hardness), the yield strength and strength of steel plates of T-3 through T-5 and DR-8 through DR-10 having a high yield strength are almost equal to those of steel plates of T-1 and T-2 used as the conventional battery can-forming plate, although the thicknesses of the steel plates of T-3 through T-5 and DR-8 through DR-10 are smaller by at least 25% than the conventional steel plates of T-1 and T-2. That is, the steel plates of T-3 through T-5 and DR-8 through DR-10 each having a thickness smaller than that of the steel plates of T-1 and T-2 by 20% - 32% satisfy the yield strength and strength required as those of the bottom wall of the battery can.

More specifically, the steel plates of T-1 and T-2 having a thickness of 0.40mm can be replaced with the steel plates of T-3 through T-5 and DR-8 through DR-10 having a thickness of 0.30mm. In this case, thickness reduction percentage (40%) at which a thickness of 0.30mm is reduced to 0.18mm by drawing and ironing is smaller than a thickness reduction percentage (55%) at which a thickness of 0.40mm is reduced to 0.18mm by drawing and ironing. Thus, the drawing and ironing operation can be accomplished in a short period of time. Supposing that the reduction percentages of both steel plates are equal to each other, the thickness of the side wall of the battery can formed of the steel plates of T-3 through T-5 and DR-8 through DR-10 can be allowed to be thinner by 20% - 32% than the thickness of the side wall of the battery can formed of the steel plates of T-1 and T-2. That is, the capacity of the battery can formed of the former can be allowed to be greater than that of the battery can formed of the latter. Further, because the thickness of the bottom wall of the battery can formed of the former is also thinner than that of the battery can formed of the latter, the capacity of the battery can formed of the former can be allowed to be greater than that of the battery can formed of the latter, and the battery can formed of the former can be allowed to be lighter than that formed of the latter.

In order to increase the capacity of the battery can, the thickness of the high yield strength steel plate is set to be approximately equal to a minimum thickness of the bottom wall of the battery can specified by a pressure inside the battery can; and the reduction percentage of the thickness of the side wall of the battery can is set to 0% - 50%.

However, the reduction percentage of the thickness of the side wall of the battery can is not limited to not more than 50%, but may be increased to 70% - 80% to make the side wall thin when the thickness of a steel plate is large to make the bottom wall strong, that is, the thickness of the steel plate is 0.6mm.

As described above, the steel plate having a high yield strength is used in the present invention. Thus, in the case of a battery can of unit-1, the thickness of the conventional steel plate of T-1 and T-2 is 0.25mm, whereas the thickness of the steel plates of T-3 through T-5, DR-8 through DR-10 can be allowed to be as thin as 0.2mm. Thus, owing to the use of the high yield strength steel plates, the minimum thickness of the battery can-forming plate can be allowed to be smaller than that of the conventional one. Therefore, mostly, the thickness of the side wall of the battery can according to the present invention is ironed at not more than 50%, although the thickness of the side wall of the conventional battery can is ironed at 50% or more. Thus, according to the present invention, the number of the processes of ironing the side wall of the battery can can be reduced.

At least one surface of the steel plate having a high yield strength is plated.

Nickel plating or alloy plating is preferably used. In the alloy plating, the following alloys are preferably used: Ni-Mn, Ni-Co, Ni-Fe, Ni-Sn, Ni-Zn, Ni-B, Ni-Si, Ni-In, Ni-Ge, Ni-Se, Ni-Ln, Ni-W, Ni-Ti, Ni-P, Ni-Mo, Ni-Ga, Co-Mo, Fe-W, and Ag-Se.

Normally, the battery can-forming plate consists of a nickel-plated steel plate of T-1 and T-2. But in addition to nickel-plating, alloy plating is preferably used to increase the hardness of a plated layer and crack the inner surface of the side wall of the battery can during drawing and ironing processing. The area of contact between the inner surface of the battery can and an active substance can be increased and the contact resistance can be reduced by cracking the inner surface of the side wall of the battery can.

Thus, in order to reduce the contact resistance, it is preferable to plate the nickel-plated or alloy-plated surface with a metal selected from Au, Ag, Mo, Co, Ir, Rh, W, and Zn having a small contact resistance.

Further, preferably, after the steel plate is plated, it is annealed and skin pass is applied thereto.

Furthermore, in the present invention, there is provided a battery can according to claim 8.

More specifically, there is provided a battery can formed of high yield strength steel plates of T-3 through T-5 and DR-8 through DR-10 having mechanical characteristics that the YP (yielding point) thereof is not less than 250N/mm ² and not more than 700N/mm ² and the HR30T (hardness) thereof is not less than 55 and not more than 80. The battery can is formed by drawing and has a bottom wall, and the thickness of the bottom wall thereof is in a range of 0.6mm - 0.1mm.

Preferably, the thickness of the bottom wall of the battery can is in a range pf 0.1mm - 0.6mm, and the thickness of the side wall thereof is in a range of 0.1mm - 0.3mm.

More specifically, preferably, when the thickness of the bottom wall of the battery can is 0.1mm - 0.2mm, the thickness of the side wall thereof is set to 0.1mm - 0.15mm; when the thickness of the bottom wall thereof is 0.2mm - 0.3mm, the thickness of the side wall thereof is set to 0.15mm - 0.2mm; when the thickness of the bottom wall thereof is 0.3mm - 0.6mm, the thickness of the side wall thereof is set to 0.2mm - 0.25mm. But the thickness reduction percentage of the side wall of the battery can relative to the bottom thereof is not set to a specified one. For example, when the thickness of the bottom wall of the battery can is 0.5mm, the side wall thereof may be 0.1mm.

As described above, because the yield strength and strength of the steel plates of T-3 through T-5 and DR-8 through DR-10 are higher than those of the conventional steel plate of T-1 and T-2, the former can be allowed to be thinner than the latter by 20% - 32%. Thus, the thickness of the bottom wall of the battery can is set to 0.1mm - 0.6mm in consideration of the correlation between the thickness of the bottom wall and the pressure inside the battery can. That is, the minimum thickness of the bottom wall of the battery can formed of the conventional steel plate is about 0.25mm, whereas the minimum thickness of the bottom wall of the battery can formed of the steel plate of the present invention can be allowed to be smaller than 0.25mm. Therefore, the capacity of the battery can can be increased by the reduced amount of the thickness. Further, the capacity of the battery can can be increased more by reducing the thickness of the side wall of the battery can by drawing and ironing the thin steel plate.

A steel plate is drawn to form a cylindrical battery can or a rectangular cylindrical battery can.

Three kinds of methods are preferably used as the press drawing method of forming the battery can, using the battery can-forming plate described above. That is, as a first method, transfer processing method is used. In this method, a steel plate is sequentially fed to a plurality of drawing dies having different drawing diameters to form the cylindrical steel plate. In this method, the thickness of the side wall of a formed battery can is almost equal to the original thickness of the steel plate. Thus, this method has an advantage that a thin steel plate having a high yield strength can be used.

As a second method, DI method is used. In DI method, a steel plate is sequentially passed through drawing dies which have different drawing diameters and are coaxially vertically arranged, with a punch applying pressure to the steel plate to obtain a cylindrical steel plate. In DI method, the steel plate can be shaped into a battery can in one process, using the punch. That is, it is unnecessary to feed the steel plate to each die. In this method, when the reduction percentage of the thickness of the steel plate is low, the number of dies coaxially vertically arranged can be reduced, so that the equipment can be smaller.

As a third method, after a steel plate is delivered to a plurality of drawing dies having different drawing diameters to form a cylindrical steel plate, using transfer drawing processing, the cylindrical steel plate is passed through a die for ironing and drawing the side wall to reduce the thickness of the side wall of the cylindrical steel plate. This method has an advantage that the processing speed can be increased when the reduction percentage of the steel plate is low.

### BRIEF DESCRIPTION OF THE DRAWINGS

Fig. 1A is a perspective view showing a battery can of a first embodiment of the present invention;
Fig. 1B is a partly enlarged sectional view showing the battery can of the first embodiment;
Fig. 2 is a schematic view showing a method of forming the battery can of the first embodiment;
Fig. 3 is a schematic view showing a measuring apparatus for use in a strength test;
Fig. 4 is a diagram showing the measured result of the strength test;
Fig. 5 is a schematic view showing a method of forming a battery can of a fifth embodiment;
Fig. 6 is a schematic view showing a method of forming a battery can of a sixth embodiment; and
Fig. 7 is a perspective view showing the battery can of the sixth embodiment.

### DESCRIPTION OF THE PREFERRED EMBODIMENTS

The embodiments of the present invention will be described below with reference to the drawings.

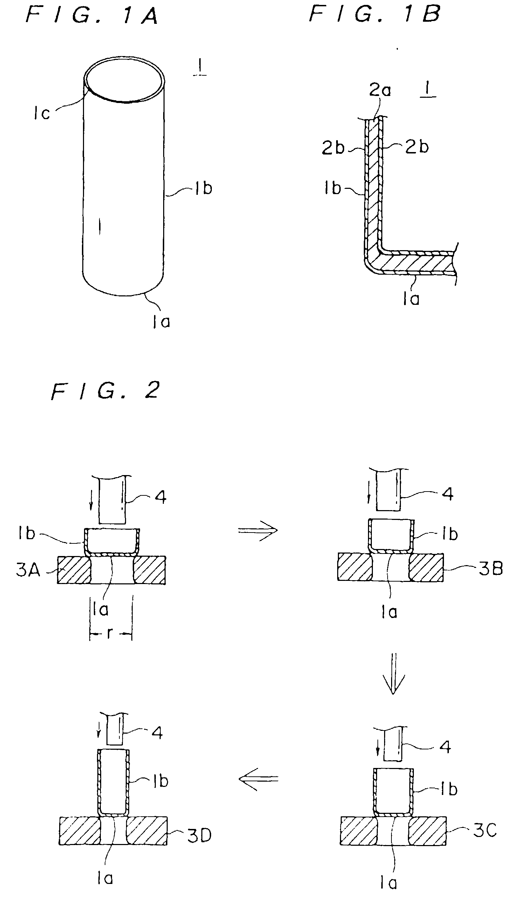

As shown in Figs. 1A and 1B, a battery can 1 of the first embodiment has a bottom wall and is cylindrical. The battery can 1 is formed of a steel plate 2a of T-5 having a high yield strength and YP = 350N/mm ² and HR30T=65±3 as its mechanical characteristic. The steel plate 2a has a thickness 0.25mm, and both surfaces thereof are nickel-plated in a thickness of 2.5µm.

Preferably, the steel plate 2a having a high yield strength is passed through a pair of rolls consisting of a roll polished with grinding stone and a bright roll so that one surface of the steel plate is processed into a rough surface and the other surface thereof is processed into a mirror-like surface.

Preferably, after the steel plate is plated with nickel or alloy, the plated surface, at least the surface corresponding to the inner plated surface of the battery can is plated with metals such as Au, Ag, Mo, Co, Ir, Rh, W, and Zn having a small contact resistance.

As shown in Fig. 2, the steel plate 2 of T-5 having a high yield strength is cut circularly to form a blank. Then, using transfer drawing method, the blank is pressed by a punch 4 by sequentially feeding it to dies 3A - 3D to draw it so as to sequentially reduce the diameter of a bottom wall 1a and increase the height of a side wall 1b. In this manner, the blank is processed into a cylindrical shape having the bottom wall. Then, the steel plate thus processed is passed through a side wall-ironing and drawing die to draw it one to three times. In this manner, the thickness of the steel plate corresponding to the side wall of the battery 1 is reduced to a required one.

The size of the battery can 1 shown in Fig. 1 formed by the drawing processing is unit-3. The thickness of the bottom wall 1a of the battery can 1 is 0.25mm equal to that of the steel plate 2a, and the thickness of the side wall 1b thereof is 0.2mm. That is, the thickness of the side wall 1b is reduced by 20%.

A first comparison sample was formed to examine the strength of the battery can 1 of the first embodiment by comparing the strengths of both battery cans with each other. The battery can 1-A of the first comparison sample is formed of a steel plate of T-1 indicated by YP = 216N/mm ² and HR30T=49±3 as its mechanical characteristic. Similarly to the first embodiment, the thickness of the steel plate used to form the battery can 1-A of the first comparison sample was 0.25mm. Both surfaces of the steel plate were nickel-plated in a thickness of 2.5µm. Similarly to the battery can 1 of the first embodiment, the thickness of the bottom wall of the battery can 1-A of the first comparison sample was 0.25mm, and the thickness of the side wall thereof was 0.2mm. The shape of the battery can 1-A of the first comparison sample was the same as that of the battery can of the first embodiment.

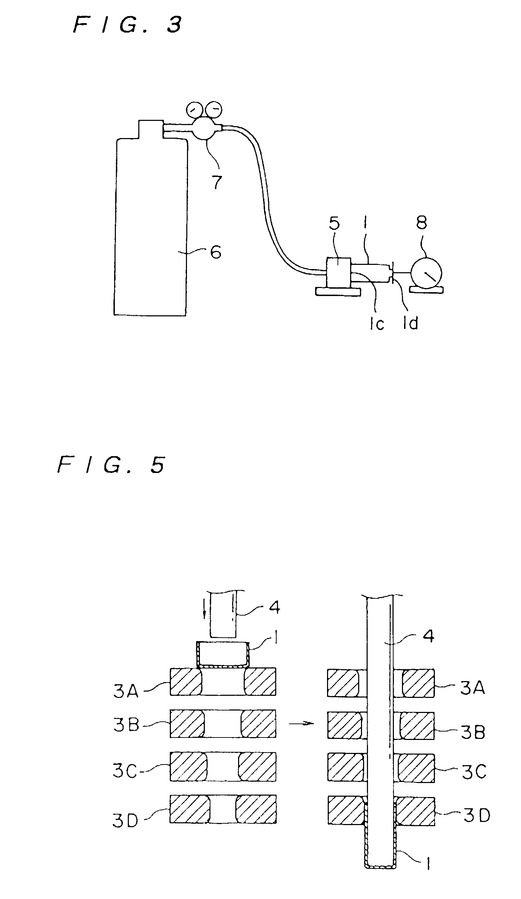

The strength of the battery can 1-A of the first embodiment and that of the battery can 1 of the first comparison sample were measured by a method shown in Fig. 3. That is, a pipe extending from an N2 bomb 6 was penetrated through the center of a fixing disc 5 welded to a sealing portion 1c of an open part of the battery can 1 with silver wax to inject N2 gas from the N2 bomb 6 into the battery can 1 through a pressure reducing valve 7. The deformation degree of a top portion 1d of the bottom wall 1a of each of the battery cans 1 and 1-A was measured with a microgauge 8.

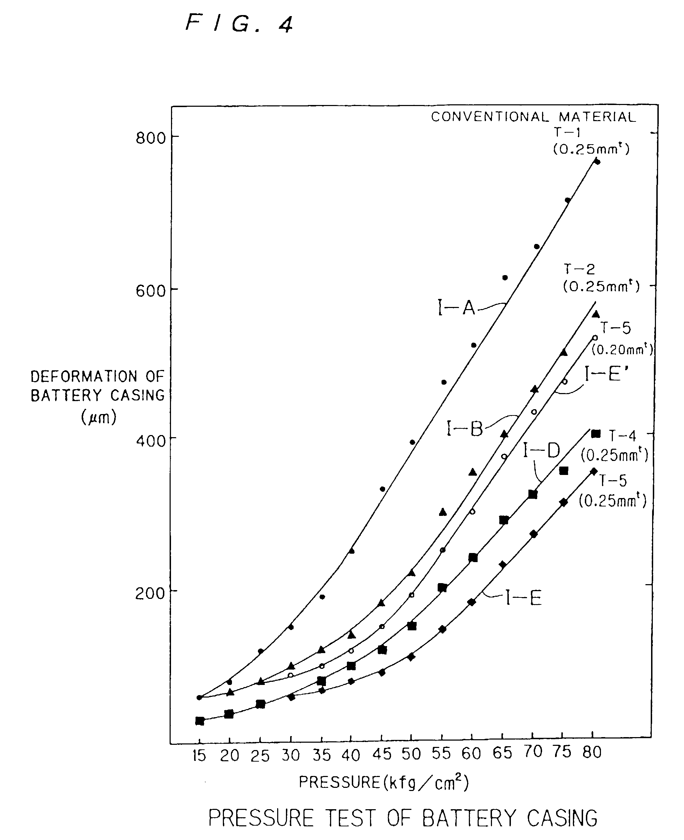

The measured results are as shown in Fig. 4. In the battery can 1-A formed of the conventional steel plate of T-1, warp of 760µm (0.76 mm) occurred at 7.84 MPa (80kgf/cm²), whereas in a battery can 1-E formed of a steel plate of T-5 according to the present invention having a high yield strength, warp of only 350µm (0.35mm) occurred at 7.84 MPa (80 kgf/cm²).

Fig. 4 also shows measured results of a battery can 1-B of a second comparison sample and a battery can 1-D of the second embodiment. The battery can 1-B of the second comparison sample was formed of a conventional steel plate of T-2. The battery can 1-D of the second embodiment was formed of a steel plate of T-4 having a high yield strength. The warp of both battery cans 1-B and 1-D was measured in the above-described method. Similarly to the first embodiment and the first comparison sample, the thickness of the bottom wall and the side wall of each of both battery cans 1-B and 1-D was set to 0.25mm and 0.2mm, respectively.

As apparent from the measured result, in the battery can 1-D formed of the steel plate of T-4, warp of only 400µm (0.40mm) occurred at 7.84 MPa (80kgf/cm²), whereas in the battery can 1-B formed of the conventional steel plate of T-2, warp of 560µm (0.56mm) occurred at 7.84 MPa (80kgf/cm²).

In the third embodiment, a battery can 1-E' having a bottom wall was formed of a steel plate of T-5 having a high yield strength and indicated by YP = 350N/mm ² and HR30T=65±3 as its mechanical characteristic. The steel plate had a thickness 0.20mm, and both surfaces thereof were nickel-plated in a thickness 2.5µm. Similarly to the first embodiment, the steel plate was drawn to form the battery can 1-E'. The thickness of the bottom wall of the battery can 1-E' was 0.20mm, and the thickness of the side wall thereof was 0.17mm.

The strength test was conducted with the same method as that of the first embodiment to examine the strain degree of the battery can 1-E'. As shown in Fig. 4, the test result was that wrap of only 530µm (0.53mm) occurred at 7.84 MPa (80kgf/cm²). The strain of the battery can 1-E' of the third embodiment is smaller than that of the battery can formed of the conventional steel plate of T-2 having a thickness of 0.25mm. That is, the test result indicates that the battery can formed of the steel plate of T-5 having a thickness of 0.20mm has a strength higher than the battery can formed of the steel plate of T-2 having a thickness of 0.25mm.

In a fourth embodiment, a battery can was formed by the same method as that of the first embodiment, using a steel plate of DR-8 having a high yield strength and indicated by YP = 549N/mm ² and HR30T=73 as its mechanical characteristic. A strength test was conducted with the same method as that of the first embodiment. Similarly to the battery can of the first embodiment formed of the steel plate of T-5, the test result was that wrap of only 350µm (0.35mm) occurred at 7.84 MPa (80kgf/cm²).

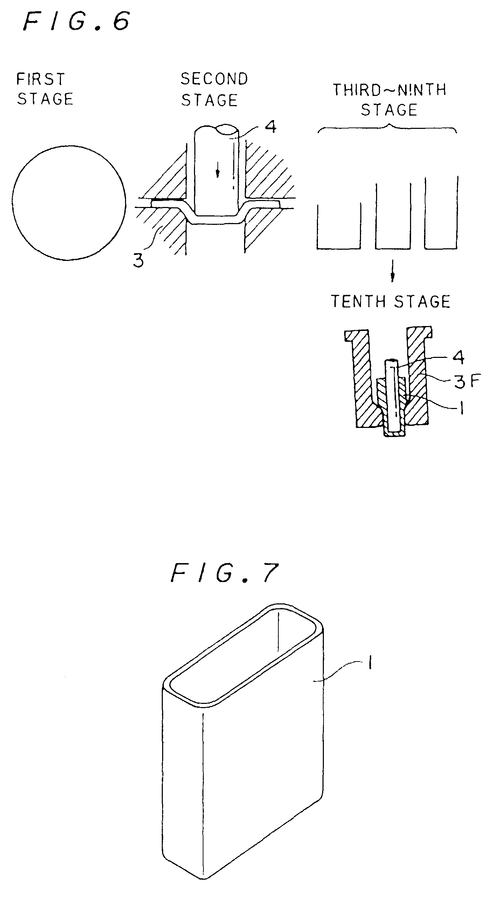

Fig. 5 shows the battery can 1 of the fifth embodiment. The battery can was formed of a high yield steel plate of T-4 plated with nickel alloy of nickel-manganese. DI processing was used to form the cylindrical battery can 1 having a bottom wall. In DI processing, a circular steel plate was sequentially passed through dies 3 (3A - 3D) having different drawing diameters (that is, inner diameters) and coaxially vertically arranged, with a punch 4 applying a pressure to the steel plate. The drawing diameter of the dies 3A - 3D decreased sequentially in the order from the dies 3A to 3D. That is, DI processing was used to form the battery can 1 of the steel plate having a high yield strength.

Fig. 6 shows the battery can of the sixth embodiment formed of a nickel-plated steel plate of DR-9 having a high yield strength. Similarly to the first embodiment, after transfer drawing processing was carried out from a first stage to a ninth stage, the steel plate was passed through an ironing and drawing die 3F to draw and iron the side wall in a 10th stage. In the transfer drawing processing carried out in the first stage to the ninth stage, the steel plate in the form of a blank was sequentially processed into a circular cylinder, elliptic cylinder rectangular cylinder to obtain a rectangular cylindrical battery can 1 shown in Fig. 7.

In the first through sixth embodiments, because the steel plates of T-3 through T-5 and DR-8 through DR-10 all having a high yield strength are used, there can be provided battery cans having the same degree of strength and yield strength as those of the conventional steel plates of T-1 and T-2, although the thicknesses of the steel plates of the present invention is smaller by more than 20% than the conventional steel plates. Accordingly, if the reduction percentage of the thickness of the side wall of the battery can formed of the steel plate of the present invention and that of the side wall of the battery can formed of the conventional steel plate are set to be equal to each other, the side wall of the battery can formed of the former can be allowed to be thinner than that of the battery can formed of the latter. If the thickness of the side wall of the battery can formed of the former is set to be equal to that of the side wall of the battery can formed of the latter, the former can be drawn at a smaller number of drawing steps and processed at a higher speed.

Table 2 shows reduction percentages of various thicknesses of the conventional steel plates of T-1 and T-2 and those of various thicknesses of the steel plates of T-3 through T-5 having a thickness smaller by 20% than that of the conventional steel plates of T-1 and T-2 and having the same strength as that of the conventional steel plates of T-1 and T-2. Using drawing process, battery cans were formed of the conventional steel plates of T-1 and T-2 and the steel plates of T-3 through T-5 by setting the thickness of the side wall of the battery can formed of the former to be equal to that of the side wall of the battery of the latter.

**Table 2**

| Conventional steel plate (T1, T2) | | | | High yield strength steel plate (T3, T4, 5) | | | |
|---|---|---|---|---|---|---|---|
| Thickness (mm) | Reduced amount (mm) of thickness | Reduction percentage of thickness | Thickness (mm) of side wall of battery can | Thickness (mm) | Reduced amount (mm) of thickness | Reduction percentage of thickness | Thickness (mm) of side wall of battery can |
| 0.50 | 0.28 | 56 | 0.22 | 0.40 | 0.18 | 45 | 0.22 |
| 0.45 | 0.25 | 55.6 | 0.20 | 0.36 | 0.16 | 44.4 | 0.20 |
| 0.40 | 0.22 | 55 | 0.18 | 0.32 | 0.14 | 43.8 | 0.18 |
| 0.35 | 0.17 | 48.6 | 0.18 | 0.28 | 0.10 | 35.7 | 0.18 |
| 0.30 | 0.12 | 40 | 0.18 | 0.24 | 0.06 | 25 | 0.18 |
| 0.25 | 0.07 | 28 | 0.18 | 0.20 | 0.05 | 25 | 0.15 |
| | | | | 0.16 | 0.06 | 37.5 | 0.10 |
| | | | | 0.12 | 0.02 | 16.7 | 0.10 |

As shown in table 2, when the side wall of a battery can formed of the steel plates of T-3, T-4, and T-5 having a thickness of 0.24 is reduced to 0.18mm, the reduction percentage of the thickness is 25%. In order for the steel plates of T-1 and T-2 to have a high yield strength almost equal to that of the steel plates of T-3, T-4, and T-5, the steel plates of T-1 and T-2 are required to have a thickness of 0.30mm. When the thickness of the side wall formed of the steel plates of T-1 and T-2 is set to 0.18mm, the reduction percentage of the thickness of the steel plates of T-1 and T-2 is 40%. That is, the thickness of the conventional steel plate is required to be reduced by 40%, whereas the thickness of the steel plate of the present invention having a high yield strength is required to be reduced by only 25%. Supposing that the reduction percentage of the thickness of the steel plate of the present invention is 40%, the reduction in the thickness of the steel plate of the present invention is 0.10mm. That is, the thickness of the side wall is 0.14mm and thus the capacity of a battery can can be increased.

In reducing the side wall thickness, mostly, the thickness reduction percentage of the side wall of the conventional steel plate is not less than 48%, whereas mostly, the thickness reduction percentage of the side wall of the steel plate of the present invention having a high yield strength can be less than 25% which is about half of the thickness reduction percentage of the conventional steel plate. Thus, the cost of the steel plate of the present invention can be allowed to be lower than that of the conventional steel plate.

As apparent from the foregoing description, according to the present invention, the steel plates of T-3 through T-5 and DR-8 through DR-10 having a yield strength and strength higher than those of the conventional steel plates of T-1 and T-2 are used as the substrate of the battery can-forming plate. Thus, the steel plates of the present invention can be allowed to be thinner than the conventional steel plates by 20% - 32%, supposing that both steel plates have the same yield strength and strength.

Because the thickness of the bottom wall of the processed battery can formed by drawing processing is equal to that of the battery can-forming plate, the bottom wall of the battery can formed of the steel plate of the present invention can be allowed to be thinner by 20% - 32% than that of the battery can formed of the conventional steel plate. Accordingly, the capacity of the battery can of the present invention can be allowed to be greater than that of the conventional battery can, and the battery can of the present invention can be allowed to be lighter than the conventional battery can. In addition, because the thickness of the steel plate of the present invention is thinner than the conventional steel plate, the former is less expensive than the conventional steel plate. Thus, the entire cost of the battery can of the present invention is much less than that of the conventional battery can.

Further, the side wall of the battery can formed of the steel plate of the present invention can be allowed to be thinner than that of the battery can formed of the conventional steel plate when the steel plate of the present invention is drawn at the thickness reduction percentage of the conventional one. Therefore, the capacity of the battery can of the present invention can be increased. Supposing that the thickness of the side wall of the battery can formed of the steel plate of the present invention is set to be equal to that of the side wall of the battery can formed of the conventional steel plate, the reduction percentage of the side wall thickness of the battery can formed of the former can be allowed to be smaller than that of the battery can formed of the latter. Accordingly, the number of steps of passing the steel plate through dies is reduced. That is, the steel plate of the present invention can be processed at a higher speed, and hence an improved productivity can be obtained.

## Claims (Claims for the following Contracting State(s): DE, FR, GB)

1. A battery can-forming plate used to form a one end-open battery can (1) having a side wall (1b) and a bottom wall (1a) by drawing, wherein the plate consists of a high yield strength steel plate (2a), the YP (yielding point) of which is not less than 250 N/mm² and not more than 700 N/mm², the HR30T (hardness) of which is not less than 55 and not more than 80, and the thickness of which is in a range of 0.6 mm - 0.1 mm, wherein one surface of the steel plate (2a) is processed as a rough surface, whereas the other surface thereof is processed as a mirror-like surface.

2. The battery can-forming plate according to claim 1, wherein the material of the steel plate (2a) is selected from T-3 through T-5 or DR-8 through DR-10 of JIS G 3303.

3. The battery can-forming plate according to claims 1 or 2, wherein at least one surface of the high yield strength steel plate (2a) is plated.

4. The battery can-forming plate according to claim 3, wherein the plating is nickel plating or alloy plating.

5. The battery can-forming plate according to claim 3 or 4, wherein the plated surface is plated with a metal selected from Au, Ag, Mo, Co, Ir, Rh, W, and Zn having a small contact resistance.

6. The battery can-forming plate according to anyone of claims 3 through 5, wherein after the steel plate is plated, the steel plate is annealed and skin pass is applied thereto.

7. A battery can formed by the battery can-forming plate according to anyone of claims 1 through 6.

8. A one end-open battery can (1) having a side wall (1b) and a bottom wall (1a) formed by drawing from a battery can-forming plate which consists of a high yield strength steel plate (2a), the YP (yielding point) of which is not less than 250 N/mm² and not more than 700 N/mm², the HR30T (hardness) of which is not less than 55 and not more than 80, and the thickness of which is in a range of 0.6 mm - 0.1 mm, wherein the thickness of the high yield strength steel plate (2a) is set to be approximately equal to a minimum thickness of the bottom wall (1a) of the battery can (1) specified by an inside pressure of the battery can; and the reduction percentage of the thickness of the side wall (1b) of the battery can is set to 0% - 50%; and wherein the height of the side wall (1b) is larger than the diameter of the bottom wall (1a).

9. The battery can according to claim 7 or 8, wherein the thickness of the bottom wall (1a) of the battery can is in a range of 0.1 mm - 0.6 mm, and the thickness of the side wall (1b) thereof is in a range of 0.1 mm - 0.3 mm.

10. The battery can according to claim 8 or 9, wherein the inner surface of the side wall and the bottom wall is a rough surface, whereas the outer surface of the side wall and the bottom wall is a mirror-like surface.

11. The battery can according to anyone of the claims 7 through 10, wherein the battery can is cylindrical or rectangular cylindrical.

## Claims (Claims for the following Contracting State(s): BE, IT, NL)

1. A battery can-forming plate used to form a one end-open battery can (1) having a side wall (1b) and a bottom wall (1a) by drawing, wherein the plate consists of a high yield strength steel plate (2a), the YP (yielding point) of which is not less than 250 N/mm² and not more than 700 N/mm², the HR30T (hardness) of which is not less than 55 and not more than 80, and the thickness of which is in a range of 0.6 mm - 0.1 mm.

2. The battery can-forming plate according to claim 1, wherein material of the steel plate (2a) is selected from T-3 through T-5 or DR-8 through DR-10 of JIS G 3303.

3. The battery can-forming plate according to claim 1 or 2, wherein the thickness of the high yield strength steel plate (2a) is set to be approximately equal to a minimum thickness of the bottom wall (1a) of the battery can (1) specified by an inside pressure of the battery can; and the reduction percentage of the thickness of the side wall (1b) of the battery can is set to 0% - 50%.

4. The battery can-forming plate according to any one of claims 1 through 3, wherein one surface of the steel plate (2a) is processed as a rough surface, whereas the other surface thereof is processed as a mirror-like surface.

5. The battery can-forming plate according to any one of claims 1 through 4, wherein at least one surface of the high yield strength steel plate (2a) is plated.

6. The battery can-forming plate according to claim 5, wherein the plating is nickel plating or alloy plating.

7. The battery can-forming plate according to claim 5 or 6, wherein the plated surface is plated with a metal selected from Au, Ag, Mo, Co, Ir, Rh, W, and Zn having a small contact resistance.

8. The battery can-forming plate according to any one of claims 5 through 7, wherein after the steel plate is plated, the steel plate is annealed and skin pass is applied thereto.

9. A battery can formed by the battery can-forming plate according to any one of claims 1 through 8.

10. The battery can according to claim 9, wherein the thickness of the bottom wall (1a) of the battery can is in a range of 0.1 mm - 0.6 mm, and the thickness of the side wall (1b) thereof is in a range of 0.1 mm - 0.3 mm.

11. The battery can according to claim 9 or 10, wherein the battery can is cylindrical or rectangular cylindrical.

## Patentansprüche (Patentansprüche für folgende(n) Vertragsstaat(en): DE, FR, GB)

1. Batterietopfblech, das zum Ziehen eines an einem Ende offenen Batterietopfes (1) mit einer Seitenwand (1b) und einer Bodenwand (1a) verwendet wird, wobei das Blech aus einer Stahlplatte (2a) mit hoher Streckfestigkeit besteht, deren YP (yielding point; Streckgrenze) nicht weniger als 250 N/mm² und nicht mehr als 700 N/mm² beträgt, deren HR30T (Härte) nicht weniger als 55 und nicht mehr als 80 beträgt und deren Dicke in einem Bereich von 0,6 mm - 0,1 mm liegt, wobei eine Oberfläche der Stahlplatte (2a) als eine rauhe Oberfläche bearbeitet ist, während ihre andere Oberfläche als eine spiegelartige Oberfläche bearbeitet ist.

2. Batterietopfblech nach Anspruch 1, bei dem das Material der Stahlplatte (2a) ausgewählt ist aus T-3 bis T-5 oder DR-8 bis DR-10 gemäß JIS G 3303.

3. Batterietopfblech nach Anspruch 1 oder 2, bei dem wenigstens eine Oberfläche der eine hohe Streckfestigkeit aufweisenden Stahlplatte (2a) plattiert ist.

4. Batterietopfblech nach Anspruch 3, bei dem die Plattierung eine Nickel- oder Legierungsplattierung ist.

5. Batterietopfblech nach Anspruch 3 oder 4, bei dem die plattierte Oberfläche mit einem Metal plattiert ist, das einen kleinen Kontaktwiderstand aufweist und ausgewählt ist aus Au, Ag, Mo, Co, IR, Rh, W und Zn.

6. Batterietopfblech nach einem der Ansprüche 3 bis 5, bei dem die Stahlplatte nach dem Plattieren getempert und dressiert worden ist.

7. Batterietopf, der aus dem Batterietopfblech nach einem der Ansprüche 1 bis 6 hergestellt ist.

8. An einem Ende offener Batterietopf (1) mit einer Seitenwand (1b) und einer Bodenwand (1a), der durch Ziehen aus einem Batterietopfblech geformt ist, das aus einer Stahlplatte (2a) mit hoher Streckfestigkeit besteht, deren YP (yielding point; Streckgrenze) nicht weniger als 250 N/mm² und mehr als als 700 N/ mm² beträgt, deren HR30T (Härte) nicht weniger als 55 und nicht mehr als 80 beträgt und deren Dicke in einem Bereich von 0,6 mm - 0,01 mm liegt, wobei die Dicke der eine hohe Streckfestigkeit aufweisenden Stahlplatte (2a) annähernd gleich einer minimalen Dicke der Bodenwand (1a) des Batterietopfes (1) eingestellt ist, die durch einen Innendruck des Batterietopfes spezifiziert ist, und das Reduktionsverhältnis der Dicke der Seitenwand (1b) des Batterietopfes auf 0% - 50% eingestellt ist, und wobei die Höhe der Seitenwand (1b) größer ist als der Durchmesser der Bodenwand (1a).

9. Batterietopf nach Anspruch 7 oder 8, bei dem die Dicke der Bodenwand (1a) des Batterietopfes in einem Bereich von 0,1 mm - 0,6 mm liegt und die Dikke der Seitenwand (1b) desselben in einem Bereich von 0,1 mm - 0,3 mm liegt.

10. Batterietopf nach Anspruch 8 oder 9, bei dem die innere Oberfläche der Seitenwand und der Bodenwand eine rauhe Oberfläche ist, während die äußere Oberfläche der Seitenwand und der Bodenwand eine spiegelartige Oberfläche ist.

11. Batterietopf nach einem der Ansprüche 7 bis 10, bei dem der Batterietopf zylindrisch oder rechteckig-zylindrisch ist.

## Patentansprüche (Patentansprüche für folgende(n) Vertragsstaat(en): BE, IT, NL)

1. Batterietopfblech, das zum Ziehen eines an einem Ende offenen Batterietopfes (1) mit einer Seitenwand (1b) und einer Bodenwand (1a) verwendet wird, wobei das Blech aus einer Stahlplatte (2a) mit hoher Streckfestigkeit besteht, deren YP (yielding point; Streckgrenze) nicht weniger als 250 N/mm² und nicht mehr als 700 N/mm² beträgt. deren HR30T (Härte) nicht weniger als 55 und nicht mehr als 80 beträgt und deren Dicke in einem Bereich von 0,6 mm - 0,1 mm liegt.

2. Batterietopfblech nach Anspruch 1, bei dem das Material der Stahlplatte (2a) ausgewählt ist aus T-3 bis T-5 oder DR-8 bis DR-10 gemäß JIS G 3303.

3. Batterietopfblech nach Anspruch 1 oder 2, bei dem die Dicke der eine hohe Streckfestigkeit aufweisenden Stahlplatte (2a) annähernd gleich einer minimalen Dicke der Bodenwand (1a) des Batterietopfes (1) eingestellt ist, die durch einen Innendruck des Batterietopfes spezifiziert ist, und das Reduktionsverhältnis der Dicke der Seitenwand (1b) des Batterietopfes auf 0% - 50% eingestellt ist

4. Batterietopfblech nach einem der Ansprüche 1 bis 3. bei dem eine Oberfläche der Stahlplatte (2a) als eine rauhe Oberfläche bearbeitet ist, während ihre andere Oberfläche als eine spiegelartige Oberfläche bearbeitet ist

5. Batterietopfblech nach einem der Ansprüche 1 bis 4, bei dem wenigstens eine Oberfläche der eine hohe Streckfestigkeit aufweisenden Stahlplatte (2a) plattiert ist.

6. Batterietopfblech nach Anspruch 5, bei dem die Plattierung eine Nickel- oder Legierungsplattierung ist.

7. Batterietopfblech nach Anspruch 5 oder 6, bei dem die plattierte Oberfläche mit einem Metal plattiert ist, das einen kleinen Kontaktwiderstand aufweist und ausgewählt ist aus Au, Ag, Mo, Co, IR, Rh, W und Zn.

8. Batterietopfblech nach einem der Ansprüche 5 bis 7, bei dem die Stahlplatte nach dem Plattieren getempert und dressiert worden ist.

9. Batterietopf, der aus dem Batterietopfblech nach einem der Ansprüche 1 bis 8 hergestellt ist.

10. Batterietopf nach Anspruch 9, bei dem die Dicke der Bodenwand (1a) des Batterietopfes in einem Bereich von 0,1 mm - 0,6 mm liegt und die Dicke der Seitenwand (1b) desselben in einem Bereich von 0,1 mm - 0,3 mm liegt.

11. Batterietopf nach Anspruch 9 oder 10, bei dem der Batterietopf zylindrisch oder rechteckig-zylindrisch ist.

## Revendications (Revendications pour l'(les) Etat(s) contractant(s) suivant(s): DE, FR, GB)

1. Tôle de formation d'un boîtier de cellule électrochimique, utilisée pour la formation d'un boîtier (1) de cellule électrochimique ayant une extrémité ouverte et comprenant une paroi latérale (1b) et une paroi de fond (1a) par emboutissage, dans laquelle la tôle est constituée d'une tôle (2a) à module d'élasticité élevé; dont la limite élastique YP n'est pas inférieure à 250 N/mm² ni supérieure à 700 N/mm², dont la dureté HR30T n'est pas inférieure à 55 ni supérieure à 80, et dont l'épaisseur est comprise entre 0,6 et 0,1 mm, une première surface de la tôle (2a) étant traitée afin qu'elle forme une surface rugueuse alors que l'autre surface est traitée afin qu'elle forme une surface analogue à un miroir.

2. Tôle de formation d'un boîtier de cellule électrochimique selon la revendication 1, dans laquelle le matériau de la tôle (2a) est choisi parmi les qualités T-3 à T-5 et DR-8 à DR-10 de la norme JIS G 3303.

3. Tôle de formation d'un boîtier de cellule électrochimique selon la revendication 1 ou 2, dans laquelle une surface au moins de la tôle (2a) de module d'élasticité élevé est revêtue.

4. Tôle de formation d'un boîtier de cellule électrochimique selon la revendication 3, dans laquelle le revêtement est un nickelage ou un dépôt d'alliage.

5. Tôle de formation d'un boîtier de cellule électrochimique selon la revendication 3 ou 4, dans laquelle la surface revêtue porte un revêtement d'un métal choisi parmi Au, Ag, Mo, Co, Ir, Rh, W et Zn ayant une faible résistance de contact.

6. Tôle de formation d'un boîtier de cellule électrochimique selon l'une quelconque des revendications 3 à 5, dans laquelle, après revêtement de la tôle, celle-ci est recuite et une passe de planage lui est appliquée.

7. Boîtier de cellule électrochimique formé à l'aide de la tôle de formation de boîtier de cellule électrochimique selon l'une quelconque des revendications 1 à 6.

8. Boîtier (1) de cellule électrochimique ayant une extrémité ouverte et possédant une paroi latérale (1b) et une paroi de fond (1a) formées par emboutissage d'une tôle de formation de boîtier de cellule électrochimique qui est constituée d'une tôle (2a) de module d'élasticité élevé, dont la limite de fluage YP n'est pas inférieure à 250 N/mm² ni supérieure à 700 N/mm², dont la dureté HR30T n'est pas inférieure à 55 ni supérieure à 80 et dont l'épaisseur est comprise entre 0,6 et 0,1 mm, dans lequel l'épaisseur de la tôle (2a) de module d'élasticité élevé est réglée afin qu'elle soit approximativement égale à une épaisseur minimale d'une paroi de fond (1a) du boîtier (1) de cellule électrochimique spécifiée par la pression interne du boîtier de cellule électrochimique, et le pourcentage de réduction de l'épaisseur de la paroi latérale (1b) du boîtier de la cellule électrochimique est réglé entre 0 et 50 %, et la hauteur de la paroi latérale (1b) est supérieure au diamètre de la paroi de fond (1a).

9. Boîtier de cellule électrochimique selon la revendication 7 ou 8, dans lequel l'épaisseur de la paroi de fond (1a) du boîtier de cellule électrochimique est comprise entre 0,1 et 0,6 mm, et l'épaisseur de sa paroi latérale (1b) est comprise entre 0,1 et 0,3 mm.

10. Boîtier de cellule électrochimique selon la revendication 8 ou 9, dans lequel la surface interne de la paroi latérale et de la paroi de fond est une surface rugueuse, alors que la surface externe de la paroi latérale et de la paroi de fond est une surface analogue à un miroir.

11. Boîtier de cellule électrochimique selon l'une quelconque des revendications 7 à 10, dans lequel le boîtier de cellule électrochimique est un cylindre ou un cylindre de section rectangulaire.

## Revendications (Revendications pour l'(les) Etat(s) contractant(s) suivant(s): BE, IT, NL)

1. Tôle de formation d'un boîtier de cellule électrochimique, utilisée pour la formation d'un boîtier (1) de cellule électrochimique ayant une extrémité ouverte et comprenant une paroi latérale (1b) et une paroi de fond (1a) par emboutissage, dans laquelle la tôle est constituée d'une tôle (2a) à module d'élasticité élevé, dont la limite élastique YP n'est pas inférieure à 250 N/mm² ni supérieure à 700 N/mm², dont la dureté HR30T n'est pas inférieure à 55 ni supérieure à 80, et dont l'épaisseur est comprise entre 0,6 et 0,1 mm.

2. Tôle de formation d'un boîtier de cellule électrochimique selon la revendication 1, dans laquelle le matériau de la tôle (2a) est choisi parmi les qualités T-3 à T-5 et DR-8 à DR-10 de la norme JIS G 3303.

3. Tôle de formation d'un boîtier de cellule électrochimique selon la revendication 1 ou 2, dans laquelle l'épaisseur de la tôle (2a) à module d'élasticité élevé est réglée afin qu'elle soit approximativement égale à l'épaisseur minimale de la paroi de fond (la) du boîtier (1) de cellule, spécifiée par la pression dans le boîtier de cellule, et le pourcentage de réduction d'épaisseur de la paroi latérale (1b) du boîtier de cellule est réglé entre 0 et 50 %.

4. Tôle de formation d'un boîtier de cellule électrochimique selon l'une des revendications 1 à 3, dans laquelle une première surface de la tôle (2a) est traitée afin qu'elle forme une surface rugueuse, alors que l'autre surface est traitée afin qu'elle forme une surface analogue à un miroir.

5. Tôle de formation d'un boîtier de cellule électrochimique selon l'une des revendications 1 à 4, dans laquelle une surface au moins de la tôle (2a) de module d'élasticité élevé est revêtue.

6. Tôle de formation d'un boîtier de cellule électrochimique selon la revendication 5, dans laquelle le revêtement est un nickelage ou un dépôt d'alliage.

7. Tôle de formation d'un boîtier de cellule électrochimique selon la revendication 5 ou 6, dans laquelle la surface revêtue porte un revêtement d'un métal choisi parmi Au, Ag, Mo, Co, Ir, Rh, W et Zn ayant une faible résistance de contact.

8. Tôle de formation d'un boîtier de cellule électrochimique selon l'une quelconque des revendications 5 à 7, dans laquelle, après revêtement de la tôle, celle-ci est recuite et une passe de planage lui est appliquée.

9. Boîtier de cellule électrochimique formé à l'aide de la tôle de formation de boîtier de cellule électrochimique selon l'une quelconque des revendications 1 à 8.

10. Boîtier de cellule électrochimique selon la revendication 9, dans lequel l'épaisseur de la paroi de fond (1a) du boîtier de cellule électrochimique est comprise entre 0,1 et 0,6 mm, et l'épaisseur de sa paroi latérale (1b) est comprise entre 0,1 et 0,3 mm.

11. Boîtier de cellule électrochimique selon la revendication 9 ou 10, dans lequel le boîtier de cellule électrochimique est un cylindre ou un cylindre de section rectangulaire.
